# EUROPEAN PATENT SPECIFICATION

(11) **EP 2 642 750 B1**
(45) Date of publication and mention of the grant of the patent: **05.07.2017**
(21) Application number: 13157385.9
(22) Date of filing: 01.03.2013
(51) Int. Cl.: H04N 5/33, B60R 21/0134, H04N 5/225, H04N 5/235

(54) **Imaging device and control system having the device**
Abbildungsvorrichtung und Steuersystem dafür
Dispositif d'imagerie et Système de commande doté du dispositif

(30) Priority: 23.03.2012 JP 2012066446
(43) Date of publication of application: 25.09.2013
(73) Proprietor: Koito Manufacturing Co., Ltd., Tokyo 108-8711 (JP)
(72) Inventor: Endo, Osamu, Shizuoka (JP)
(74) Representative: Hoffmann Eitle

(56) References cited:
- JP-A- S5 885 676
- JP-A- 2006 044 359
- JP-A- 2006 338 594
- JP-A- 2011 232 606
- JP-B2- 3 146 420
- US-A1- 2007 228 259
- US-A1- 2011 079 713
- JAN THOMANEK ET AL: "Comparing Visual Data Fusion Techniques Using FIR and Visible Light Sensors to Improve Pedestrian Detection", 2011 INTERNATIONAL CONFERENCE ON DIGITAL IMAGE COMPUTING: TECHNIQUES AND APPLICATIONS, 1 December 2011 (2011-12-01), pages 119-125, XP055073900, DOI: 10.1109/DICTA.2011.27 ISBN: 978-0-76-954588-2

## Description

### [Technical Field]

The present invention relates to a control system that is suitable for application to a control system that controls light distribution to an object based on an image taken by an imaging device or that controls to provide an alarm to a driver.

There has been proposed a so-called adaptive driving beam (ADB) control system, that is, a control system that images a region ahead of a host vehicle by an imaging device, detects a vehicle in front such as a preceding vehicle or an oncoming vehicle and a pedestrian that are present in the region ahead of the host vehicle, and controls light distribution of a vehicular headlamp so as to prevent glare to the detected vehicle in front and pedestrian and brightly illuminate the region ahead of the host vehicle. In the ADB control system, in normal cases, the vehicle in front is detected by analyzing an image taken by an imaging device such as a visible light camera. In a case where the vehicle in front is difficult to visually recognize as a visible image, for example at nighttime, it is necessary to detect images of light spots in an image that are generated by a headlamp or tail lamp of the vehicle in front. Therefore, it is difficult to detect an object, particularly a pedestrian, that is difficult to capture as images of light spots. In order to detect a pedestrian, in Patent Document 1, there is proposed an art for detecting a pedestrian by an image taken by a visible light camera and an image taken by a far-infrared camera. Because the far-infrared camera can image infrared rays generated by body heat of a pedestrian, the pedestrian who cannot be detected by the visible light camera can be imaged and detected.

Patent Document 2 is related to an imaging device having visible light imaging means that capture an image using visible light and far-infrared imaging means that capture an image using far-infrared rays wherein the visible light imaging means and the far-infrared imaging means are integrally accommodated in one imaging housing, and an imaging optical axis of the visible light imaging means coincides with the imaging optical axis of the far-infrared imaging means.

Document 3 is related to a system for pedestrian recognition, in which images from a visible light and an infrared camera are used.

Patent Document 3 is related to a similar system, in which a spotlight is controlled based on an analysis of an infrared image.

Patent document 4 is related to a vehicular lamp with integrated camera.

### [Related Art]

### [Patent Document]

[Patent Document 1]
   Japanese Patent Application Laid-Open (Kokai) No. 2006-338594
[Patent Document 2]
   US 2011/079713 A1
[Document 3]
   JAN THOMANEK ET AL: "Comparing Visual Data Fusion Techniques Using FIR and Visible Light Sensors to Improve Pedestrian Detection", 2011 INTERNATIONAL CONFERENCE ON DIGITAL IMAGE COMPUTING: TECHNIQUES AND APPLICATIONS, 1 December 2011
[Patent Document 3]
   JP 2006 044359 A
[Patent Document 4]
   JP 3146420

### [Summary of the Invention]

### [Problem to be Solved by the Invention]

In the art of Patent Document 1, the pedestrian and the like can be detected by a far-infrared image. Therefore, by applying the art to the ADB control system, it is possible to control light distribution suitable for a vehicle in front and a pedestrian. However, in Patent Document 1, because the visible light camera and the far-infrared camera are separately formed, equipment cost is increased and a space for mounting the cameras on an automobile is required. In addition, Patent document 1 is the art for accurately detecting a pedestrian by analyzing an image taken by each of the visible light camera and the far-infrared camera to detect the pedestrian and the coordinates of the pedestrian, and by correlating the coordinates of the pedestrian detected from the image taken by the visible light camera with the coordinates of the pedestrian detected from the image taken by the far-infrared camera. As a result, the detection processes are complicated, and the detection processing time is increased. In the actual ADB control system, it is necessary to accurately and rapidly detect a position of a vehicle in front and a pedestrian that changes relative to a position of a host vehicle from moment to moment. Therefore, it is difficult to apply the art of Patent Document 1 to the ADB control system that requires such rapid detection. As in the case where a pedestrian recognition device proposed in Patent Document 1 allows a driver to quickly and properly response in accordance with a behavior of a pedestrian, the detection processing time is increased. In this regard, the art of Patent Document 1 has a problem to be solved.

It is an object of the present invention to provide a control system using an imaging device that achieves reduction of the size by integrally forming a visible light camera and a far-infrared camera, and allows rapid detection of an object such as a vehicle in front or a pedestrian.

### [Means for Solving the Problem]

An imaging device used in the present invention includes:
visible light imaging means that captures an image using visible light; and far-infrared imaging means that captures an image using far-infrared rays, wherein the visible light imaging means and the far-infrared imaging means are integrally accommodated inside one imaging housing, and an imaging optical axis of the visible light imaging means coincides with an imaging optical axis of the far-infrared imaging means.

In a preferable aspect of the imaging device used in the present invention, the visible light imaging means may include a visible light imaging lens and a visible light imaging element, the far-infrared imaging means may include a far-infrared imaging lens and a far-infrared imaging element, the visible light imaging lens and the far-infrared lens may be integrally formed, a lens optical axis of the visible light imaging lens may coincide with the imaging optical axis of the visible light imaging means, and a lens optical axis of the far-infrared lens may coincide with the imaging optical axis of the far-infrared imaging means. Each of the visible light imaging element and the far-infrared imaging element may have an imaging surface in which multiple light receiving elements are arranged in a matrix, a center position of the imaging surface of the visible light imaging element may be aligned with the imaging optical axis of the visible light imaging means, a center position of the imaging surface of the far-infrared imaging element may be aligned with the imaging optical axis of the far-infrared imaging means, and coordinates of the light receiving elements with reference to the center position in at least a portion of the imaging surface of the visible light imaging element may correspond to coordinates of the light receiving elements with reference to the center position in at least a portion of the imaging surface of the far-infrared imaging element.

The imaging device includes image processing means that includes an image processing portion that obtains an image from an image signal obtained by the visible light imaging element and an image from an image signal obtained by the far-infrared imaging element, and an image composition portion that generates one composite image by combining the images obtained by the image processing portion. The image composition portion may perform composition processing such that center positions of the images aligned with each other.

A control system of the present invention includes the imaging device as described above, and control means that includes an object detecting portion that detects an object by analyzing an image obtained by the imaging device, and a control portion that performs a predetermined control based on the detected object. The object detecting portion detects the object by analyzing a composite image obtained by the image processing means, and the control portion performs the predetermined control based on coordinates of the object with reference to a center position of the composite image.

According to the present invention, the imaging device images a region ahead of a vehicle, and the control means are a control system that controls light distribution of a vehicular lamp that illuminates the region ahead of the vehicle. Further, the imaging device is accommodated inside the vehicular lamp.

### [Effects of the Invention]

According to the imaging device used in the present invention, because the visible light imaging means and the far-infrared imaging means are integrally formed, it is possible to achieve reduction of the size of the imaging device. In addition, the imaging optical axis of the visible light imaging means coincides with the imaging optical axis of the far-infrared imaging means, and the center position of the image taken using the visible light is aligned with the center position of the image taken using the far-infrared rays. Therefore, the image processing means can obtain a composite image from the images taken using the visible light and the far-infrared rays only by superimposing the images while maintaining the relative positions of imaged objects on the images. Thus, it is possible to achieve reduction of the size of the imaging device, to simplify the processes by the image processing means, and to rapidly detect the imaged object.

According to the control system of the present invention, the control system includes the imaging device as described above, and detects the object by analyzing the composite image obtained by the imaging device, and performs the predetermined control, for example, the light distribution control based on the detected object. Because the imaging device rapidly detects the object, it is possible to quickly control an appropriate light distribution to the object and control the light distribution that ensures the traffic safety by following the change of a situation of the object.

### [BRIEF DESCRIPTION OF THE DRAWINGS]

[FIG. 1]

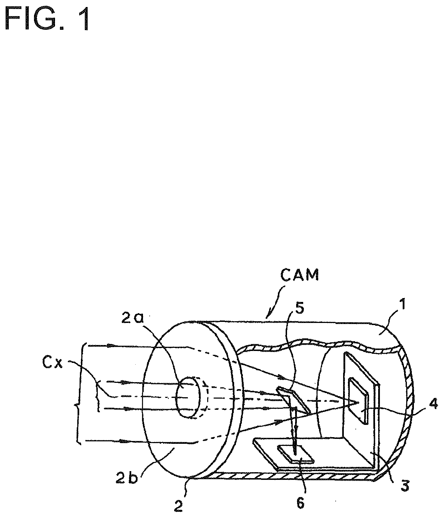

   FIG. 1 is partially broken perspective view schematically showing an imaging device used in an embodiment of the present invention.
[FIG. 2]

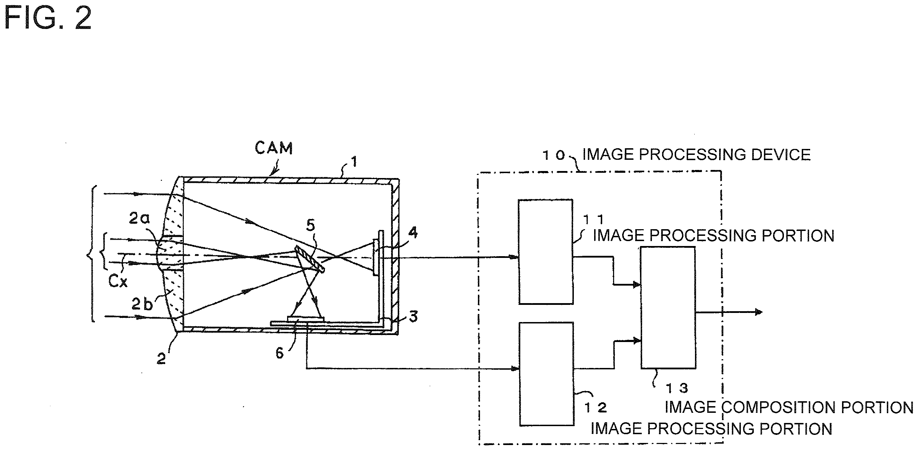

   FIG. 2 is a block diagram of a sectional structure of the imaging device and an image processing device connected to the imaging device.
[FIG. 3]

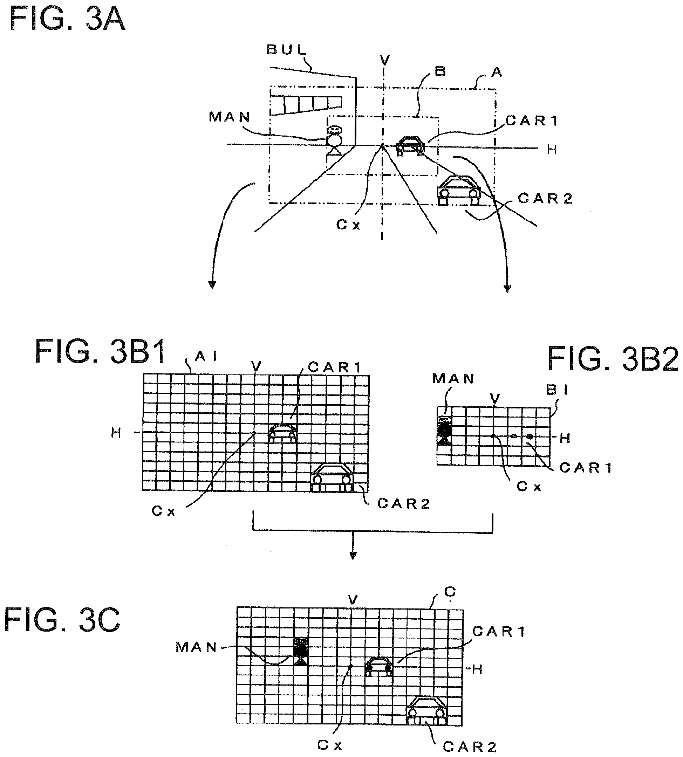

   FIG. 3 is a schematic diagram illustrating an image processing including image composition.
[FIG. 4]

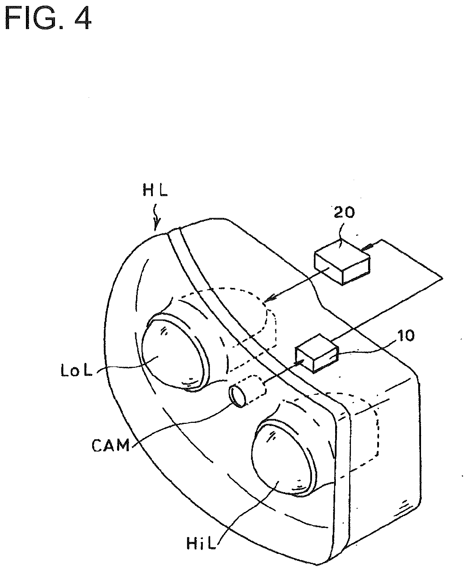

   FIG. 4 is an external view of a headlamp to which a light distribution control system is applied.
[FIG. 5]

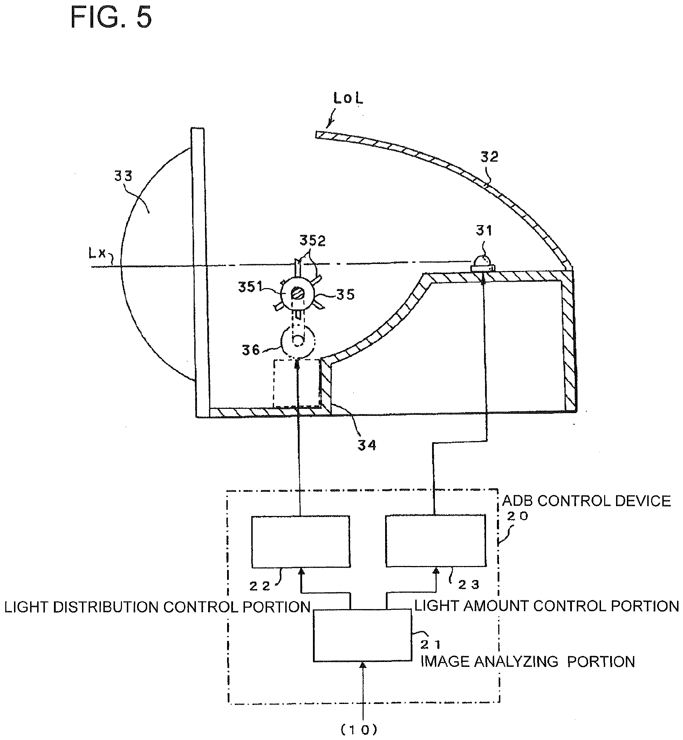

   FIG. 5 is a block diagram of a section structure of a lamp unit and a control device connected to the lamp unit.
[FIG. 6]

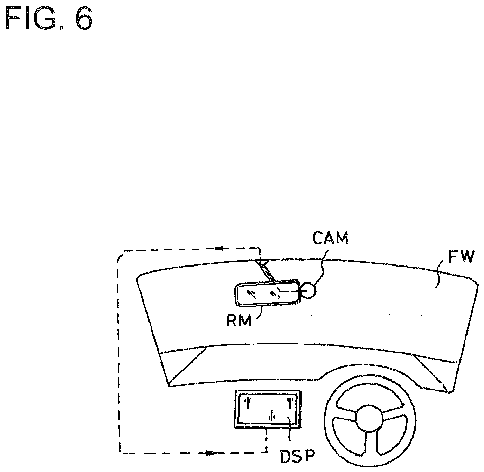

   FIG. 6 is a diagram schematically showing a pedestrian recognition system.

### [Modes for Carrying Out the Invention]

Next, an embodiment of the present invention will be described with reference to the drawings. FIG. 1 is a partially broken perspective view schematically showing an imaging device of the present invention. The imaging device is configured as a visible/infrared camera CAM in which a visible light camera and a far-infrared camera are integrally formed. As shown by a section structure in FIG. 2, in the visible/infrared camera CAM, a circular imaging lens 2 is fixed to a front end portion of a cylindrical camera housing 1. In the imaging lens 2, a small diameter region including a lens optical axis at the center of the lens is configured as a visible light lens 2a, and an annular region that is a surrounding region of the visible light lens 2a is configured as a far-infrared lens 2b. The visible light lens 2a is made of a colorless transparent resin and formed as a plano-convex lens with a small diameter. The far-infrared lens 2b is made of a material having a refractive index required for far-infrared rays, such as germanium or chalcogenide, and is configured as an annular plano-convex lens. For example, the visible light lens 2a and the far-infrared lens 2b is integrally formed by inserting the visible light lens 2a into a hole at the center of the far-infrared lens 2b. Alternatively, only a center region of the far-infrared lens 2b formed to have a large diameter may be subjected to transparent processing and configured as the visible light lens 2a. An optical axis of the visible light lens 2a and an optical axis of the far-infrared lens 2b coincide with a camera optical axis Cx of the visible/infrared camera CAM. Focal lengths of the lenses 2a, 2b are set to be equal to each other, and curvatures of lens surfaces of the lenses 2a, 2b are different from each other due to the difference between a refractive index of the lens 2a for visible light and that of the lens 2b for far-infrared rays.

In a rear end portion of the camera housing 1, a far-infrared image sensor 4 is supported by an L-shaped base 3. An imaging surface of the far-infrared image sensor 4 extends in a direction orthogonal to the camera optical axis Cx, and a center of the imaging surface is positioned at the camera optical axis Cx. The far-infrared image sensor 4 and the far-infrared lens 2b constitute a far-infrared camera (far-infrared imaging means). A mirror 5 is arranged rearward of the imaging lens 2 on the camera optical axis Cx so as to face obliquely downward at an angle of 45 degrees. The mirror 5 is formed by a small plane mirror and is fixed to the camera housing 1 or the L-shaped base 3 by a support member not shown in FIG. 1 and FIG. 2. A visible light image sensor 6 is positioned vertically downward of the mirror 5 and is supported by the L-shaped base 3. An imaging surface of the visible light image sensor 6 extends in a direction orthogonal to the camera optical axis Cx that is bent due to the reflection by the mirror 5, and a center of the imaging surface is aligned with the bent lens optical axis. The visible light image sensor 6, the mirror 5, and the visible light lens 2a constitute a visible light camera (visible light imaging means).

Details on the far-infrared image sensor 4 and the visible light image sensor 6 will be described later with reference to FIG. 3. The far-infrared image sensor 4 is configured as a QVGA image sensor in which a plurality of light receiving elements capable of receiving far-infrared rays is arranged in a matrix. The far-infrared image sensor 4 takes an image formed by the far-infrared lens 2b and outputs the taken image as a far-infrared image signal. The visible light image sensor 6 is configured as a VGA image sensor in which a plurality of light receiving elements capable of receiving visible light is arranged in a matrix. That is, the visible light image sensor 6 is configured as an image sensor having an imaging surface that is formed by the number of light receiving elements that is approximately four times (2×2) that in the far-infrared image sensor 4, in other words, formed by the number of pixels that is four times that in the far-infrared image sensor 4. The visible light image sensor 6 takes an image formed by the visible light lens 2a and outputs the taken image as a visible light image signal.

In the visible/infrared camera CAM, an image of an object for visible light is formed by the visible light lens 2a, is reflected by the mirror 5, and is taken by the visible light image sensor 6. In addition, an image of an object for far-infrared rays is formed by the far-infrared lens 2b, and is taken by the far-infrared image sensor 4. For example, when the visible/infrared camera CAM is mounted on a front portion of an automobile, and a region ahead of the automobile shown in FIG. 3A is imaged, an image of a region A is taken by the visible light image sensor 6, and an image of a region B is formed by the far-infrared lens 2b and taken by the far-infrared image sensor 4. That is, because the focal lengths of the visible light lens 2a and the far-infrared lens 2b are equal to each other, and the size of the imaging surface of the visible light image sensor 6 is four times the size of the imaging surface of the far-infrared image sensor 4, an area of the region A that is imaged by the visible light image sensor 6 is four times (length-by-width : 2-by-2) an area of the region B that is imaged by the far-infrared image sensor 4.

As described above, the number of light receiving elements arranged in the visible light image sensor 6 is four times (2×2) the number of light receiving elements arranged in the far-infrared image sensor 4. In this example, as shown in FIG. 3B, an image AI taken by the visible light image sensor 6 is an image of 12×16 pixels (FIG. 3B1), and an image BI taken by the far-infrared image sensor 4 is an image of 6×8 pixels (FIG. 3B2). Automobiles CAR1, CAR 2 are imaged as visible images by the visible light image sensor 6. However, a pedestrian MAN behind a building BUL is not imaged by the visible light image sensor 6. Meanwhile, far-infrared rays generated by a headlamp of an oncoming vehicle CAR 1 that is present within a region to be imaged, and far-infrared rays generated by body heat of the pedestrian MAN are taken as images by the far-infrared sensor 4.

The visible/infrared camera CAM includes an image processing device 10 connected to the far-infrared image sensor 4 and the visible light image sensor 6 as shown by a block diagram in FIG. 2. The image processing device 10 includes image processing portions 11, 12 and an image composition portion 13. The image processing portions 11, 12 process image signals obtained by the image sensors 4, 6 to obtain images. The image composition portion 13 combines the images obtained by the image processing portions 11, 12 to obtain a composite image and outputs the obtained composite image. The image processing portions 11, 12 obtain the binarized image signals by converting image signals output from the image sensors 4, 6 into level signals corresponding to the matrix of the light receiving elements. For the image processing portions 11, 12, an image processing portion provided in this type of imaging device that has been conventionally proposed may be used.

The image composition portion 13 combines the images obtained by the image processing portions 11, 12 to form one image. Here, the two images AI, BI shown in FIG. 3B are combined to form a composite image C shown in FIG. 3C. The composition is performed only by aligning center positions of the images AI, BI obtained by the image processing portions 11, 12 with each other, that is, causing camera optical axes Cx of the far-infrared camera and the visible light camera to coincide with each other, and superimposing the images AI, BI. That is, because the image AI obtained using visible light, which is a VGA-sized image, is four times larger than the image BI obtained using far-infrared rays, which is a QVGA-sized image, and the center positions of the images AI, BI are aligned with the camera optical axis Cx, multiple pixels in the far-infrared image BI correspond one-to-one to multiple pixels in a region of the visible light image AI corresponding to the image BI. Therefore, the images AI, BI are combined only by superimposing the image signals of the images AI, BI on one another on coordinate axes with reference to the center points Cx. In this way, it is possible to provide the composition portion 13 with a simple configuration, and the number of composition processes may be extremely small.

Thus, in the visible/infrared camera CAM according to the present invention, an optical axis of the visible light camera coincides with that of the far-infrared camera, the visible light camera and the far-infrared camera are integrally formed, and a ratio between the number of pixels of the image sensor 4 of the visible light camera and the number of pixels of the image sensor 6 of the far-infrared camera is set to correspond to a ratio between an area of the region to be imaged by the visible light camera and an area of the region to be imaged by the far-infrared camera. Therefore, the image processing device can obtain a composite image from the images taken by the two cameras only by aligning the center positions of the images with each other and superimposing the image signals of the images. The coordinates of the pixels in the obtained composite image C can be detected as coordinates of an object. As a result, a two-stage process of detecting coordinates of an object on an image obtained by each of two cameras and superimposing the coordinates of the object detected on the respective images as in Patent Document 1 is not necessary. In addition, each of the two cameras is not required to include means for detecting coordinates of an object. Therefore, it is possible to provide a camera with the simplified configuration and rapidly detect an imaged object. Thus, the visible/infrared camera CAM according to the present invention can be applied to a system that requires the rapid detection.

FIG. 4 is a schematic view showing an embodiment in which the present invention is applied to an ADB control system of a headlamp of an automobile using an imaging device according to the present invention, that is, the visible/infrared camera CAM. Although not shown in FIG. 4, right and left headlamps are symmetrically configured. Only a right headlamp HL is shown in FIG. 4. In the right headlamp HL, a low-beam lamp unit LoL and a high-beam lamp unit HiL are arranged inside a lamp housing, and the visible/infrared camera CAM according to the present invention is arranged between the lamp units so as to image a region ahead of the automobile. Used as the high-beam lamp unit HiL is a lamp unit configured so as to radiate light in a high-beam distribution pattern, and a detailed description thereof will be omitted here.

The low-beam lamp unit LoL is configured as a variable light distribution type lamp unit. As this type of lamp unit, a lamp unit that has been already proposed can be used, so brief description thereof will be made. That is, as shown by a schematic sectional view in FIG. 5, a rotational ellipsoid-shaped reflector 32, a light source 31, a radiating lens 33, and a variable shade 35 are arranged in the low-beam lamp unit LoL. The reflector 32 is supported on a unit base 34. The light source 31 is formed by a light emitting diode (LED) or the like mounted on the unit base 34 at a first focal point of the reflector 32. The radiating lens 33 is supported on a front end portion of the unit base 34, and a rear focal point of the radiating lens 33 is located at a second focal point of the reflector 32. The variable shade 35 performs the ADB control by blocking a part of light that is emitted from the light source 31 and is reflected by the reflector 32.

The variable shade 35 is configured as a rotary shade that varies a region of light to be blocked in accordance with its rotational position. That is, the variable shade is configured such that a plurality of shade plates 552 with different shapes is arranged at different positions on a peripheral surface of a rotational shaft 351 so as to extend in a radial direction. A rotational position of the variable shade 35 is controlled to be varied by a shade actuator 36. When the rotational position is varied, any one of the plurality of shade plates 352 is moved in an optical path of the lamp unit, the region of the light to be blocked by the variable shade 35 is varied, and light distribution pattern of light radiated through the radiating lens 33 is varied. Thus, the ADB control is performed.

A light distribution control device 20 is connected to the low-beam lamp unit LoL. The light distribution control device 20 includes an image analyzing portion 21, a light distribution control portion 22, and a light amount control portion 23. The image analyzing portion 21 receives the composite image C obtained by the image processing device 10 of the visible/infrared camera CAM, analyzes the composite image C, and detects an object such as a pedestrian and an oncoming vehicle. In order to detect the type of the object, a predetermined algorithm is required. However, because the coordinates of the pixels in the obtained composite image C can be detected as coordinates of the object, a position of the object can be easily detected only by correlating the coordinates of the object with the coordinates in the region ahead of the vehicle. This allows a simple configuration of the image analyzing portion 21 and rapid analysis by the image analyzing portion 21.

The light distribution control portion 22 controls light distribution pattern based on information such as the type and position of the object, which is obtained from the analysis by the image analyzing portion 21. In the control of the light distribution pattern, an appropriate light distribution pattern is obtained by controlling the shade actuator 36 to selectively control the shade plates 352 of the variable shade 35. For example, in an example of FIG. 3, although not shown in the drawing, light distribution pattern is set such that light reaching a region corresponding to the oncoming vehicles CAR1, CAR2 is blocked, and a region in which the pedestrian MAN is present is widely irradiated with light. This light distribution pattern inhibits glare to the oncoming vehicles CAR1, CAR2 and facilitates a driver to visually recognize the pedestrian MAN who may come out from behind the building BUL.

The light amount control portion 23 controls the amount of the light emitted from the light source 31 based on information such as the type and position of the object which is obtained from the analysis by the image analyzing portion 21 as in the light distribution control portion 22. The light amount control is preferably performed in association with the light distribution control. For example, in an example of FIG. 3, when a region in which the pedestrian MAN may come out is irradiated with light, control is performed such that the amount of the light emitted from LED is reduced in order to prevent the glare to the pedestrian MAN. Alternatively, instead of blocking light reaching the oncoming vehicles CAR1, CAR2, the amount of the light reaching the oncoming vehicles CAR1, CAR2 may be reduced to suppress the glare to the oncoming vehicles CAR1, CAR2.

When the imaging device used in the present invention, that is, the visible/infrared camera CAM according to an embodiment is applied to the ADB control system, the visible/infrared camera CAM can quickly detect an object such as a vehicle and a pedestrian that is present in an imaged region ahead of a host vehicle. Therefore, it is possible to quickly and appropriately control light distribution of the headlamp HL of the host vehicle to the object and to achieve the ADB control system that increases visibility for a driver and therefore is useful for safe driving.

In the ADB control system according to the present embodiment, the visible/infrared camera CAM and the low-beam lamp unit LoL are arranged side-by-side inside the same headlamp HL. Accordingly, the camera optical axis Cx of the visible/infrared camera and a lamp optical axis Lx are located at almost the same position. Thus, an angle between the lamp optical axis Lx and a line connecting the low-beam lamp unit LoL and the object is almost the same as an angle between the camera optical axis Cx and a line connecting the visible/infrared camera CAM and the object. Therefore, an angular position of the object that is detected by the composite image C obtained from the images taken by the visible/infrared camera CAM can be applied to the light distribution control in a light distribution pattern, a center of which is aligned with the lamp optical axis Lx of the low-beam lamp unit LoL. As a result, it is possible to easily perform the ADB light distribution control. In addition, in order to establish the ADB control system using the camera CAM, it is only necessary to mount the headlamp HL on an automobile, and the visible/infrared camera CAM is automatically mounted on the automobile. Therefore, it is not necessary to perform an extra operation of mounting the camera on a body of the automobile, and it is possible to easily establish the ADB control system.

In the above-described embodiment, the imaging device used in the present invention is applied to an imaging device for the ADB control system. However, the imaging device of the present invention may be applied to an imaging device for an object recognition control system that detects a vehicle in front or a pedestrian that cannot be visually recognized by the driver and allows a driver to visually recognize the vehicle in front and the pedestrian. FIG. 6 is a view schematically showing an example of the object recognition control system. The visible/infrared camera CAM is integrally disposed in a portion of a rear-view mirror RM of an automobile, and a region ahead of a host vehicle is imaged through a windshield FW. An image obtained from the images taken by the visible/infrared camera CAM, that is, the composite image C obtained by the image processing device 10 shown in FIG. 3C (not shown in FIG. 6) is displayed on a display DSP disposed on a dashboard in a cabin, for example, on a display DSP of a navigation device.

The above-described configuration makes it possible to take an image, using far-infrared rays, of a pedestrian who is difficult to recognize in the light of a headlamp during driving in an area outside an urban area particularly at nighttime, and to display the image on the display DSP, so that the driver can recognize the pedestrian. Here, an alarm may be provided to the driver simultaneously with the image display. In the case where the object recognition control system is established, the visible/infrared camera CAM can be mounted inside the headlamp HL.

The specific configuration of the visible/infrared camera serving as the imaging device according to the present invention is not limited to the present embodiment as long as the visible light camera and the far-infrared camera are integrally formed, a camera optical axis of the visible light camera coincides with a camera optical axis of the far-infrared camera, and more preferably a pixel array of the image taken by the visible light camera corresponds one-to-one to that of the image taken by the far-infrared camera. For example, the configuration of the visible light camera may be replaced with that of the far-infrared camera. Alternatively, the number of mirrors may be changed, and the image sensors may be arranged at different positions. In addition, a wavelength region of the above-described far-infrared rays may include a narrower wavelength region of the infrared rays.

A lamp that is used in the ADB control system, in other words, a light distribution control system using the imaging device of the present invention is not limited to the headlamp of the present embodiment. A marker lamp such as a tail lamp or other supplementary lamps in which the visible/infrared camera is mounted may be used, as long as the light distribution control system is a system for controlling light distribution of the lamp based on information on an object in a surrounding area of a vehicle, which is obtained by the imaging device, and especially as long as the lamp is useful for establishing a system for controlling light distribution, in which the imaging device is integrally mounted in the lamp.

### [Industrial applicability]

The present invention can be applied to a control system that performs various controls using an imaging device that images a surrounding area of a vehicle using far-infrared rays and visible light.

### [Description of the Reference Numerals]

- 1: CAMERA HOUSING
- 2: IMAGING LENS
- 2a: VISIBLE LIGHT LENS
- 2b: FAR-INFRARED LENS
- 4: FAR-INFRARED IMAGE SENSOR
- 5: MIRROR
- 6: VISIBLE LIGHT IMAGE SENSOR
- 10: IMAGE PROCESSING DEVICE
- 11, 12: IMAGE PROCESSING PORTION
- 13: IMAGE COMPOSITION PORTION
- 20: ADB CONTROL DEVICE
- 21: IMAGE ANALYZING PORTION
- 22: LIGHT DISTRIBUTION CONTROL PORTION
- 23: LIGHT AMOUNT CONTROL PORTION
- 31: LIGHT SOURCE (LED)
- 32: REFLECTOR
- 33: RADIATING LENS
- 35: VARIABLE SHADE
- 36: SHADE ACTUATOR
- CAM: VISIBLE/INFARED CAMERA (IMAGING DEVICE)

## Claims

1. A control system that comprises
a vehicular lamp;
an imaging device accommodated inside the vehicular lamp and comprising:
an imaging housing (1);
visible light imaging means that captures an image using visible light; and
far-infrared imaging means that captures an image using far-infrared rays, wherein
the visible light imaging means and the far-infrared imaging means are integrally accommodated inside the one imaging housing (1), an imaging optical axis (Cx) of the visible light imaging means coincides with an imaging optical axis (Cx) of the far-infrared imaging means, and an image processing means (10) that includes
an image processing portion (11) that obtains an image from an image signal obtained by the visible light imaging element (6) and an image from an image signal obtained by the far-infrared imaging element (4), and
an image composition portion (13) that generates one composite image by combining the images obtained by the image processing portion (12), and a control means that includes
an object detecting portion that detects an object by analyzing an image obtained by the imaging device, and
a control portion that performs a predetermined control based on the detected object, wherein
the image composition portion performs composition processing such that center positions of the images are aligned with each other,
the imaging device images a region ahead of a vehicle,
the control means controls light distribution of the vehicular lamp that illuminates the region ahead of the vehicle,
the object detecting portion detects the object by analyzing a composite image obtained by the image processing means, and
the control portion performs the predetermined control based on coordinates of the object with reference to a center position of the composite image.

2. The control system according to claim 1, **characterized in that**
the visible light imaging means includes a visible light imaging lens (2a) and a visible light imaging element (6), the far-infrared imaging means includes a far-infrared imaging lens (2b) and a far-infrared imaging element (4), the visible light imaging lens (2a) and the far-infrared lens (2b) are integrally formed,
a lens optical axis of the visible light imaging lens (2a) coincides with the imaging optical axis of the visible light imaging means, and
a lens optical axis of the far-infrared lens (2b) coincides with the imaging optical axis of the far-infrared imaging means.

3. The control system according to claim 2, **characterized in that**
each of the visible light imaging element and the far-infrared imaging element has an imaging surface in which multiple light receiving elements are arranged in a matrix,
a center position of the imaging surface of the visible light imaging element is aligned with the imaging optical axis of the visible light imaging means,
a center position of the imaging surface of the far-infrared imaging element is aligned with the imaging optical axis of the far-infrared imaging means, and
coordinates of the light receiving elements with reference to the center position in at least a portion of the imaging surface of the visible light imaging element correspond to coordinates of the light receiving elements with reference to the center position in at least a portion of the imaging surface of the far-infrared imaging element.

## Patentansprüche

1. Steuersystem, das umfasst
eine Fahrzeugleuchte;
eine Abbildungsvorrichtung, die innerhalb der Fahrzeugleuchte untergebracht ist und umfasst:
ein Abbildungsgehäuse (1);
Abbildungsmittel für sichtbares Licht, das ein Bild unter Verwendung von sichtbarem Licht aufzeichnet; und
Abbildungsmittel für fernes Infrarot, das ein Bild unter Verwendung von fernen Infrarotstrahlen aufzeichnet, wobei
das Abbildungsmittel für sichtbares Licht und das Abbildungsmittel für fernes Infrarot vollständig innerhalb des einen Abbildungsgehäuses (1) untergebracht sind,
eine optische Abbildungsachse (Cx) des Abbildungsmittels für sichtbares Licht sich mit einer optischen Abbildungsachse (Cx) des Abbildungsmittels für fernes Infrarot deckt, und
ein Bildverarbeitungsmittel (10), das einen Bildverarbeitungsteil (11) enthält, der ein Bild gewinnt aus einem Bildsignal, das durch das Abbildungselement (6) für sichtbares Licht gewonnen wurde, und ein Bild aus einem Bildsignal, das durch das Abbildungselement (4) für fernes Infrarot gewonnen wurde, und
einen Bildzusammensetzungsteil (13), der ein zusammengesetztes Bild generiert durch Kombinieren der durch den Bildverarbeitungsteil (12) gewonnenen Bilder, und
ein Steuermittel, das enthält
einen Objekterkennungsteil, der ein Objekt durch Analysieren eines durch die Abbildungsvorrichtung gewonnenen Bildes erkennt, und
einen Steuerteil, der eine vorbestimmte Steuerung basierend auf dem erkannten Objekt ausführt, wobei
der Bildzusammensetzungsteil die Zusammensetzungsverarbeitung derart ausführt, dass die Mittenpositionen der Bilder miteinander ausgerichtet sind,
die Abbildungsvorrichtung einen Bereich vor dem Fahrzeug abbildet,
das Steuermittel Lichtverteilung der Fahrzeugleuchte steuert, die den Bereich vor dem Fahrzeug beleuchtet,
der Objekterkennungsteil das Objekt durch Analysieren eines zusammengesetzten Bildes erkennt, das durch das Bildverarbeitungsmittel gewonnen wurde, und
der Steuerteil die vorbestimmte Steuerung basierend auf Koordinaten des Objektes mit Bezug auf eine Mittenposition des zusammengesetzten Bildes ausführt.

2. Steuersystem nach Anspruch 1, **dadurch gekennzeichnet, dass**
das Abbildungsmittel für sichtbares Licht eine Abbildungslinse (2a) für sichtbares Licht und ein Abbildungselement (6) für sichtbares Licht enthält,
das Abbildungsmittel für fernes Infrarot eine Abbildungslinse (2b) für fernes Infrarot und ein Abbildungselement (4) für fernes Infrarot enthält,
die Abbildungslinse (2a) für sichtbares Licht und die Linse (2b) für fernes Infrarot einstückig ausgebildet sind,
eine optische Linsenachse der Abbildungslinse (2a) für sichtbares Licht sich mit der optischen Abbildungsachse des Abbildungsmittels für sichtbares Licht deckt, und
eine optische Linsenachse der Linse (2b) für fernes Infrarot sich mit der optischen Abbildungsachse des Abbildungsmittels für fernes Infrarot deckt.

3. Steuersystem nach Anspruch 2, **dadurch gekennzeichnet, dass**
jedes von dem Abbildungselement für sichtbares Licht und dem Abbildungselement für fernes Infrarot eine Abbildungsfläche besitzt, in der mehrere Lichtempfangselemente in einer Matrix angeordnet sind,
eine Mittenposition der Abbildungsfläche des Abbildungselements für sichtbares Licht mit der optischen Abbildungsachse des Abbildungsmittels für sichtbares Licht ausgerichtet ist,
eine Mittenposition der Abbildungsfläche des Abbildungselements für fernes Infrarot mit der optischen Abbildungsachse des Abbildungsmittels für fernes Infrarot ausgerichtet ist, und
Koordinaten der Lichtempfangselemente mit Bezug auf die Mittenposition in zumindest einem Teil der Abbildungsfläche des Abbildungselements für sichtbares Licht mit Koordinaten der Lichtempfangselemente mit Bezug auf die Mittenposition in zumindest einem Teil der Abbildungsfläche des Abbildungselements für fernes Infrarot übereinstimmen.

## Revendications

1. Système de commande qui comprend
une lampe pour véhicule ;
un dispositif d'imagerie logé à l'intérieur de la lampe pour véhicule et comprenant :
un logement d'imagerie (1) ;
un moyen d'imagerie en lumière visible qui capture une image en utilisant la lumière visible; et
un moyen d'imagerie en infrarouge lointain qui capture une image en utilisant des rayons infrarouges lointains,
dans lequel
le moyen d'imagerie en lumière visible et le moyen d'imagerie en infrarouge lointain sont logés d'un seul tenant à l'intérieur du logement d'imagerie (1),
un axe optique d'imagerie (Cx) du moyen d'imagerie en lumière visible coïncide avec un axe optique d'imagerie (Cx) du moyen d'imagerie en infrarouge lointain, et
un moyen de traitement d'image (10) qui inclut une portion de traitement d'image (11) qui obtient une image à partir d'un signal d'image obtenu par l'élément d'imagerie en lumière visible (6) et une image à partir d'un signal d'image obtenu par l'élément d'imagerie en infrarouge lointain (4), et
une portion de composition d'image (13) qui produit une image composite en combinant les images obtenues par la portion de traitement d'image (12), et
un moyen de commande qui inclut
une portion de détection d'objet qui détecte un objet en analysant une image obtenue par le dispositif d'imagerie, et
une portion de commande qui effectue une commande prédéterminée sur la base de l'objet détecté, dans lequel
la portion de composition d'image effectue un traitement de composition de sorte que des positions centrales des images sont alignées les unes sur les autres,
le dispositif d'imagerie prend une image d'une région en avant d'un véhicule,
le moyen de commande effectue la commande de la distribution de lumière de la lampe pour véhicule qui éclaire la région en avant du véhicule,
la portion de détection d'objet détecte l'objet en analysant une image composite obtenue par le moyen de traitement d'image, et
la portion de commande effectue la commande prédéterminée sur la base de coordonnées de l'objet en se référant à une position centrale de l'image composite.

2. Système de commande selon la revendication 1, **caractérisé en ce que**
le moyen d'imagerie en lumière visible inclut une lentille d'imagerie en lumière visible (2a) et un élément d'imagerie en lumière visible (6),
le moyen d'image en infrarouge lointain inclut une lentille d'imagerie en infrarouge lointain (2b) et un élément d'imagerie en infrarouge lointain (4),
la lentille d'imagerie en lumière visible (2a) et la lentille en infrarouge lointain (2b) sont formées d'un seul tenant,
un axe optique de lentille de la lentille d'imagerie en lumière visible (2a) coïncide avec l'axe optique d'imagerie du moyen d'imagerie en lumière visible, et
un axe optique de lentille de la lentille en infrarouge lointain (2b) coïncide avec l'axe optique d'imagerie du moyen d'imagerie en infrarouge lointain.

3. Système de commande selon la revendication 2, **caractérisé en ce que**
chacun de l'élément d'imagerie en lumière visible et de l'élément d'imagerie en infrarouge lointain a une surface d'imagerie dans laquelle de multiples éléments de réception de lumière sont agencés en une matrice,
une position de centre de la surface d'imagerie de l'élément d'imagerie en lumière visible est alignée sur l'axe optique d'imagerie du moyen d'imagerie en lumière visible,
une position de centre de la surface d'imagerie de l'élément d'imagerie en infrarouge lointain est alignée sur l'axe optique d'imagerie du moyen d'imagerie en infrarouge lointain, et
des coordonnées des éléments de réception de lumière en se référant à la position de centre dans au moins une portion de la surface d'imagerie de l'élément d'imagerie en lumière visible correspondent à des coordonnées des éléments de réception de lumière en se référant à la position de centre dans au moins une portion de la surface d'imagerie de l'élément d'imagerie en infrarouge lointain.
